# EUROPEAN PATENT SPECIFICATION

(11) **EP 0 631 273 B1**
(45) Date of publication and mention of the grant of the patent: **15.12.1999**
(21) Application number: 94201678.3
(22) Date of filing: 14.06.1994
(51) Int. Cl.: G10L 5/06

(54) **Method for detecting the best path through a stochastic network, in particular for speech or image recognition**
Verfahren zur Bestimmung der optimalen Weges durch ein stochastisches Netzwerk insbesondere für Sprach- oder Bilderkennung
Procédé de détermination du chemin optimal à travers un réseau stochastique en particulier pour la reconnaissance de la parole ou d'images

(30) Priority: 25.06.1993 NL 9301119
(43) Date of publication of application: 28.12.1994
(73) Proprietor: Koninklijke KPN N.V., 9726 AE Groningen (NL)
(72) Inventor: Van Alphen, Paul, NL-2282 CM Rijswijk (NL); Döll, Jeroen, Nl-2312 PW Leiden (NL)

(56) References cited:
- EP-A- 0 312 209
- EP-A- 0 387 602
- THE JOURNAL OF THE ACOUSTICAL SOC. OF AM., vol.84, no.6, December 1988, NEW YORK pages 2007 - 2017 V.N.GUPTA ET AL. 'Fast search strategy in a large vocabulary word recognizer'
- ICASSP-92, vol.1, 23 March 1992, SAN FRANCISCO pages 17 - 20 L.R.BAHL ET AL. 'A fast match for continuous speech recognition using allophonic models'

## Description

### A.BACKGROUND OF THE INVENTION

The invention relates to a method for determining the most likely path through a stochastic network having various states which are defined a priori and can be reached with probabilities known a priori, such as a Markov model, which network comprises various subnetworks, such as network branches, each having one or more of such states. In particular, such methods are used for the recognition of a priori unknown signal elements such as elements of a speech or image signal, the subnetworks being mappings of various, a priori known words or word elements (keywords). Recognition may be regarded as classification into a priori known signal elements, to be carried out according to a classification algorithm. Such a method is generally known and is discussed, inter alia, in the dissertation mentioned under C1. There, all these matters are discussed extensively, while reference is also made to other relevant publications. In the American patent by IBM, mentioned under C2., reference is likewise made to a number of publications in this field. In particular, the invention can be used for speech recognition; the invention can, however, also be applied to related fields, for example to the field of image recognition. Hereinafter it is assumed that the objective is to recognize certain words in a speech signal, in other words that the executing system has to determine which keyword a speech signal (speech utterance) corresponds to.

### Front-end

According to the prior art, an a priori unknown speech signal which has to be recognized is first preprocessed in a so-called front-end. Such a front-end consists, for example, of a filter bank or an LPC analyser (LPC = Linear Predictive Coding) and converts the signal fed in into a limited number of so-called feature vectors. Such feature vectors are used as input for the classification algorithm in which a check is performed whether the feature vectors, with a certain probability, correspond to reference vectors which have previously been derived from a priori known (speech) signal elements. Incidentally, the feature vectors may or may not be converted (so-called vector quantization) into discrete vectors, for example with the aid of a code book; this then also takes place in the said front-end.

### Markov process

According to the prior art, the feature vectors may be further subjected to a stochastic process, in particular a Markov process (represented by a Markov network model) in which a certain number of states (Sn) are defined which, with certain probabilities, can be reached from previous states, i.e. other states or the same state. The process parameters are formed by an A matrix or transition matrix having transition probabilities (aij), i.e. the probabilities with which a state (Si) goes to another state (Sj), and a vector (V) with the probability distribution concerning the initial state, in other words the probabilities (vj) of the process starting in the various states (Sj). The vector may also form part of the A matrix.

### Viterbi

The most likely sequential order of the states which will be reached during a certain observation time (T) can be determined by means of a dynamic programming process, in particular the so-called Viterbi process. Therein, the probabilities are first determined, at successive moments (t) and for the various states, of such a state being able to be reached from the various other states, and from this the most likely (penultimate) state is then selected. The most likely sequential order ('the best path') can, however, only be calculated after the observation time has elapsed, by means of so-called backtracing. In the process, starting from the calculated most likely (or a priori indicated as such) end state - which forms the end of the looked-for best path - the looked-for most likely state sequential order (the best path) is determined on the basis of the selected most likely penultimate states (which thus must have been recorded!). The present invention relates to the phase indicated here in the recognition process and offers an attractive alternative to the said backtracing.

### Recognition

Just as a particular Markov process (Markov model) has a preference (highest probability) for a particular state sequential order, it is conversely possible to calculate, from a particular state sequential order, a particular Markov model (i.e. the parameters for a model having a previously determined model topology). Thus Markov models can be generated ("trained") for various known signal elements such as words, which therefore can each be defined in the form of a (sub-)Markov model. Thus, a priori unknown words (word signals) or component parts of sentences, after having been preprocessed in the front-end, can be recognized in a Markov processor in which the Markov models of various a priori known words (obtained by training) are stored. For detailed discussion of these techniques, reference is made to the dissertation mentioned under C1., also a paper to be published shortly (see under C3) by the inventors and dealing with the present method according to the invention.

### Drawback of the prior art

A drawback manifesting itself in practice of the method according to the prior art is the said backtracing which is required for calculating the preferred path through the Markov models (see under Viterbi). As it is necessary to record, for each moment, the most likely penultimate state for all states, this method costs quite large amounts of memory space, which is a drawback, in particular, with VLSI implementations; moreover, the memory space is a function of the size of the network and of time. A further drawback is that, since the preferred path can only be calculated after an (unknown) signal to be examined has finished, this forms a practical limitation of the maximum duration of that signal (word, sentence). Moreover, only after the backtracing is complete, is it known which path is the best path and thus which keyword the speech utterance corresponds to.

### B.SUMMARY OF THE INVENTION

The object of the invention is to overcome the abovementioned drawbacks and to provide a method which works more efficiently than the known method. Although the method has, in particular, been developed for speech recognition, the method is more generally usable as a method for determining the most likely path through a stochastic network such as a Markov model having various subnetworks. It is characteristic for the method according to the invention that there is detected, at successive moments, for at least one state, through which of these different subnetworks runs the most likely path ending in that state. The invention is based on the insight that, certainly in the case of speech recognition etc. where the network is formed by various network branches, in general subnetworks, it is important not so much which is the exact path through the network (from state to state), but really only which network branch that best path runs through. After all, in this context it is only important whether the best path runs through the network branch which is a mapping of a first keyword, or through the network branch which is a mapping of a second keyword, or through the network branch which is a mapping of a third keyword, etc., the speech utterance evidently corresponding to that first, second or third etc. keyword. Making use of this insight, a check is therefore always carried out according to the invention at each processing moment whether, up to that moment, the best path runs through branch one, two or three etc. Preferably, each network branch is identified by an identification code ("identifier"), for which purpose, for example, one (or several) of the states (i.e. the designations of these states) can be used for each network branch.

If the method according to the invention is used for speech or image recognition, the subnetworks being a mapping of a known (key)word or image, each of these words or images is therefore, as it were, represented by an identifier; detection of the best identifier at the same time means detection of the best word or image, respectively.

### C.REFERENCES

1.Alphen, P. van
   HMM-BASED CONTINUOUS-SPEECH RECOGNITION;
   Systematic evaluation of various system components
   Dissertation University of Amsterdam
   Leidschendam (NL), PTT RESEARCH, July 3, 1992
   ISBN 90-72125-32-0
2.US Patent 5050215 [IBM]
3.Alphen, P. van; Döll, J.
   Keyword propagation Viterbi algorithm
   To be published

### D.SPECIFIC EMBODIMENTS

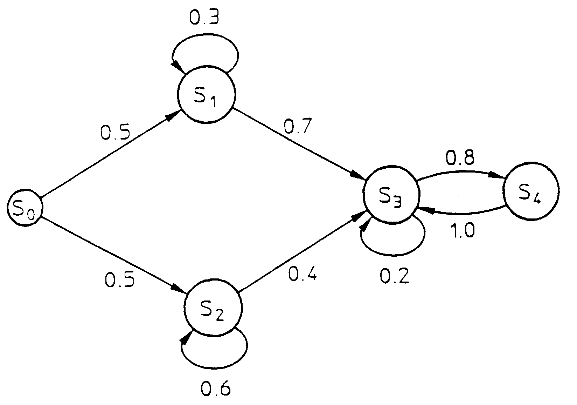

There follows a discussion, with reference to a number of examples of simple Markov models (Markov network) having parallel branches, how according to the prior art and to the invention, respectively, it is determined through which branch runs the best path, the path of states which will be reached with the greatest probability. First it will be illustrated, with reference to a first Markov model, model 1, how, according to the prior art, with the aid of the Viterbi algorithm, the best (most likely path) is determined. Model 1 is represented graphically in Fig. 1, as well as by an A matrix which is shown in Table 1 and indicates the transition probabilities of the various states with respect to one another (including the initial probability distribution from a (fictitious) state 0).

According to the Viterbi algorithm there is calculated, at successive moments, for the various states, which was the most likely previous state, namely by calculating for each state the probability of another (or the same) state having been the previous state, and selecting therefrom the best, most likely state. For model 1, the result as depicted in Table 4 under A is obtained (the probabilities are given in the form of their logarithms). Use has been made for this purpose of a demonstration program which is shown in Table 12. Then, the most likely end state is selected (under B.) - this may, incidentally, also have been indicated a priori as the end state - and, starting from that end state, the most likely previous states are selected (under C.), which process is known as "backtracing" (sometimes called "backtracking"). The best path for the successive moments is determined by inverting the sequential order of the state sequence thus obtained, which results in the best path, from state to state. A drawback of this algorithm is that, in order for the backtracing to be possible, the "most likely previous state" values (having the dimension of time) must be stored in a memory. Performing the backtracing process itself also takes time.

These drawbacks can be overcome by first choosing path "identifiers" which each represent a branch or cluster ("subnetwork") of the Markov model (Markov network). While it is not possible, using this novel method, always to detect the exact course (at state level) of the best path, it is at all times possible to detect through which subnetwork (thus at subnetwork level) runs the best path. This reduction is acceptable for those cases, where the path selection process serves for classifying unknown variables into a priori defined variables, each represented by a discrete subset of the Markov model, as in the case of speech or image recognition.

Table 5 shows the execution of the process according to the invention on the same model 1; in this case, use was made of the program shown in Table 13. First there was chosen, for each network branch, an identifier, in this case the first (and only) state in that branch. At each instant and for each state, the most likely penultimate state is selected, as in the known Viterbi process. If that most likely penultimate state is identical with one of the identifiers, said identifier is assigned for that moment to said state as the "best identifier". If the most likely penultimate state does not occur in the set of path identifiers, the best identifier is assigned for that moment to the state which was valid for the previous moment. An important advantage of this method, compared to the known method, is that the backtracing process can be dispensed with, since in phase A., for one or more states (in this working example for all states) the best branch identifier is propagated at all times from the penultimate to the last state. At the instant when the end state is reached, the best branch identifier for that end state can immediately be calculated and it is thus known through which branch runs the best path.

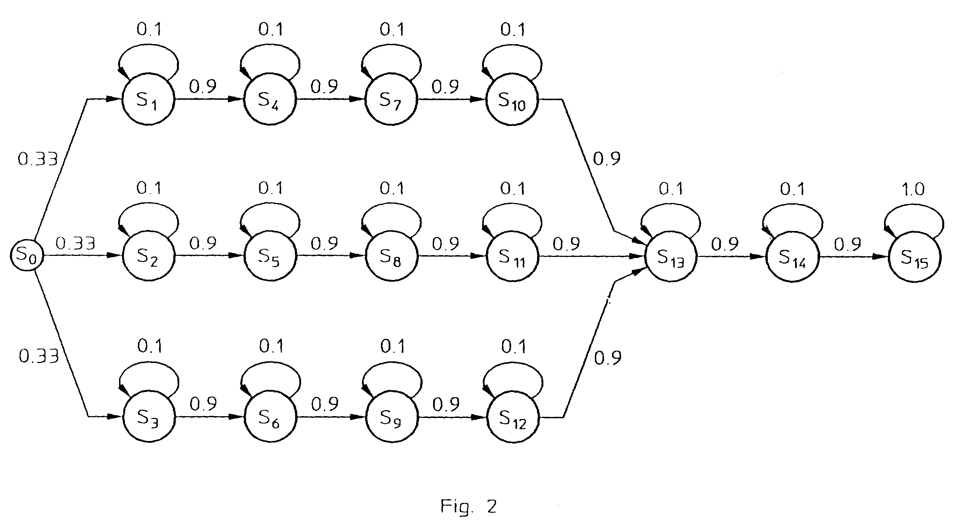

Both the known Viterbi process and the process according to the invention are illustrated in the Tables 2, 6 and 7, based on a second Markov model which is represented graphically in Fig. 2 and which comprises three parallel network branches. For the purpose of performing the method according to the invention, the first state of each branch is designated as the identifier of that branch.

It is known to use the Viterbi process in the recognition of signals; this has already been discussed above. Generally, use is made there of so-called 'Hidden Markov Models' (HMMs), each state representing, with a priori known probabilities, certain observations (substates). In the following example it is assumed that each state, with certain probabilities, represents the observations X, Y and Z. These are shown in the so-called B matrix, see Table 3. The best path through the Markov network is now not exclusively determined by the network itself, but also by an utterance supplied to the network and represented by an 'observation', formed by the elements X, Y and Z. In Table 8, the result is depicted of the calculation of the best path through model 2 for the observation 'ZZXYYZXX', use being made of backtracing. The calculation proceeds in the same way as in the above, but account is taken, when calculating the probabilities, of the probabilities known from the B matrix. The program used is shown in Table 14.

In Table 9, the calculation is shown for the same observation 'ZZXYYZXX', but making use of the method according to the invention; the demonstration program used is shown in Table 15. According to the known method, the best path is formed by the successive states (see Table 8, bottom) 3; 6; 9; 12; 13; 14; 15; 15, from which there follows the conclusion that the observation 'ZZXYYZXX' corresponds, with the highest probability, to the network branch formed by the states 3 to 12 inclusive, which is representative for the keyword of that third branch. The method according to the invention results in the same conclusion, namely that the observation 'ZZXYYZXX' shows the greatest correspondence with the branch of which state 3 is the identifier, in other words the network branch which is formed by the states 3 to 12 inclusive. For another observation, 'XYZXYZXYZ' the state sequential order (as a result of the Viterbi program from Table 14) becomes 2; 5; 8; 11; 13; 14; 15; 15, the result of which is that that observation shows the greatest correspondence with the keyword of the second network branch (state 2 to 11, inclusive). Yet another observation, 'YXXZYXXZ' gives, as the most likely path, the sequence 'state 1; state 4; state 7; state 10; state 13; state 14; state 15; state 15' from which it is apparent that that observation shows the greatest correspondence to the keyword assigned to the first network branch (state 1 to 10, inclusive). Naturally, these different observations, 'ZZXYYZXX', 'XYZXYZXYZ' and 'YXXZYXXZ' give the same result when the method according to the invention is used (with the program from Table 15), namely, respectively, branch (= keyword) 3, 2 and 1.

In the above, when the novel method according to the present invention was performed, the network branches (clusters) were at all times represented by the state number of one of the branch states (namely 1 and 2 for model 1, and 1, 2 and 3 for model 2). Tables 11 and 12 show the results of a demonstration program shown in Table 16, performed on model 1 and model 2, wherein each branch is a priori assigned a 'cluster identifier', namely A, B and (for model 2) C; these therefore have the same function of the 'branch identification states' 1, 2 and (for model 2) 3, as was shown in the Tables 5 and 7. The result of Table 10 ('the most likely cluster identifier is A') corresponds to that of Table 5 ('the most likely branch identification state is state 1'); the same applies to the result of Table 11 ('C') and Table 7 ('3'). Finally, it should be noted that it may be sufficient to calculate the best branch identifier for only one state, in particular the end state, and that, as has already been noted, that end state has already been defined previously as such. Table 11a shows this for an end state 15 selected a priori, and Table 11b for an end state 10 determined a priori (both for best path identification in model 2).

**Table 1:**

| A matrix of model 1 | | | | | |
|---|---|---|---|---|---|
| | 1 | 2 | 3 | 4 | This matrix demonstrates that the system which is represented by this model 1 has a 50% probability of reaching state 2 from its start state (state 0). From state 2 there is a 60% probability of the system again reaching state 2, and 40% of it reaching state 3 etc. |
| 0 | 0.5 | 0.5 | 0.0 | 0.0 | |
| 1 | 0.3 | 0.0 | 0.7 | 0.0 | |
| 2 | 0.0 | 0.6 | 0.4 | 0.0 | |
| 3 | 0.0 | 0.0 | 0.2 | 0.8 | |
| 4 | 0.0 | 0.0 | 1.0 | 0.0 | |

**Table 2:**

| A matrix of model 2 | | | | | | | | | | | | | | | |
|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 |
| 0 | 0.3 | 0.3 | 0.3 | 0.0 | 0.0 | 0.0 | 0.0 | 0.0 | 0.0 | 0.0 | 0.0 | 0.0 | 0.0 | 0.0 | 0.0 |
| 1 | 0.1 | 0.0 | 0.0 | 0.9 | 0.0 | 0.0 | 0.0 | 0.0 | 0.0 | 0.0 | 0.0 | 0.0 | 0.0 | 0.0 | 0.0 |
| 2 | 0.0 | 0.1 | 0.0 | 0.0 | 0.9 | 0.0 | 0.0 | 0.0 | 0.0 | 0.0 | 0.0 | 0.0 | 0.0 | 0.0 | 0.0 |
| 3 | 0.0 | 0.0 | 0.1 | 0.0 | 0.0 | 0.9 | 0.0 | 0.0 | 0.0 | 0.0 | 0.0 | 0.0 | 0.0 | 0.0 | 0.0 |
| 4 | 0.0 | 0.0 | 0.0 | 0.1 | 0.0 | 0.0 | 0.9 | 0.0 | 0.0 | 0.0 | 0.0 | 0.0 | 0.0 | 0.0 | 0.0 |
| 5 | 0.0 | 0.0 | 0.0 | 0.0 | 0.1 | 0.0 | 0.0 | 0.9 | 0.0 | 0.0 | 0.0 | 0.0 | 0.0 | 0.0 | 0.0 |
| 6 | 0.0 | 0.0 | 0.0 | 0.0 | 0.0 | 0.1 | 0.0 | 0.0 | 0.9 | 0.0 | 0.0 | 0.0 | 0.0 | 0.0 | 0.0 |
| 7 | 0.0 | 0.0 | 0.0 | 0.0 | 0.0 | 0.0 | 0.1 | 0.0 | 0.0 | 0.9 | 0.0 | 0.0 | 0.0 | 0.0 | 0.0 |
| 8 | 0.0 | 0.0 | 0.0 | 0.0 | 0.0 | 0.0 | 0.0 | 0.1 | 0.0 | 0.0 | 0.9 | 0.0 | 0.0 | 0.0 | 0.0 |
| 9 | 0.0 | 0.0 | 0.0 | 0.0 | 0.0 | 0.0 | 0.0 | 0.0 | 0.1 | 0.0 | 0.0 | 0.9 | 0.0 | 0.0 | 0.0 |
| 10 | 0.0 | 0.0 | 0.0 | 0.0 | 0.0 | 0.0 | 0.0 | 0.0 | 0.0 | 0.1 | 0.0 | 0.0 | 0.9 | 0.0 | 0.0 |
| 11 | 0.0 | 0.0 | 0.0 | 0.0 | 0.0 | 0.0 | 0.0 | 0.0 | 0.0 | 0.0 | 0.1 | 0.0 | 0.9 | 0.0 | 0.0 |
| 12 | 0.0 | 0.0 | 0.0 | 0.0 | 0.0 | 0.0 | 0.0 | 0.0 | 0.0 | 0.0 | 0.0 | 0.1 | 0.9 | 0.0 | 0.0 |
| 13 | 0.0 | 0.0 | 0.0 | 0.0 | 0.0 | 0.0 | 0.0 | 0.0 | 0.0 | 0.0 | 0.0 | 0.0 | 0.1 | 0.9 | 0.0 |
| 14 | 0.0 | 0.0 | 0.0 | 0.0 | 0.0 | 0.0 | 0.0 | 0.0 | 0.0 | 0.0 | 0.0 | 0.0 | 0.0 | 0.1 | 0.9 |
| 15 | 0.0 | 0.0 | 0.0 | 0.0 | 0.0 | 0.0 | 0.0 | 0.0 | 0.0 | 0.0 | 0.0 | 0.0 | 0.0 | 0.0 | 1.0 |

**Table 3:**

| B-matrix of model 2 | | | |
|---|---|---|---|
| | X | Y | Z |
| 1 | 0.8 | 0.1 | 0.1 |
| 2 | 0.1 | 0.8 | 0.1 |
| 3 | 0.1 | 0.1 | 0.8 |
| 4 | 0.4 | 0.3 | 0.3 |
| 5 | 0.3 | 0.4 | 0.3 |
| 6 | 0.3 | 0.3 | 0.4 |
| 7 | 0.5 | 0.3 | 0.2 |
| 8 | 0.2 | 0.5 | 0.3 |
| 9 | 0.3 | 0.2 | 0.5 |
| 10 | 0.1 | 0.1 | 0.8 |
| 11 | 0.8 | 0.1 | 0.1 |
| 12 | 0.1 | 0.8 | 0.1 |
| 13 | 0.3 | 0.3 | 0.3 |
| 14 | 0.3 | 0.3 | 0.3 |
| 15 | 0.3 | 0.3 | 0.3 |

**Table 4:**

| Path identification model 1 according to Viterbi proces |
|---|
| MOST LIKELY STATE PATH OF MODEL 1 USING THE VITERBI ALGORITHM |
| A. THE MOST LIKELY PREVIOUS STATES AT TIMES 2 TO 8: |
| At time t=2 for state 1 the most likely previous state was state 1; l= -2 |
| At time t=2 for state 2 the most likely previous state was state 2; l= -1 |
| At time t=2 for state 3 the most likely previous state was state 1; l= -1 |
| At time t=3 for state 1 the most likely previous state was state 1; l= -3 |
| At time t=3 for state 2 the most likely previous state was state 2; l= -2 |
| At time t=3 for state 3 the most likely previous state was state 2; l= -2 |
| At time t=3 for state 4 the most likely previous state was state 3; l= -1 |
| At time t=4 for state 1 the most likely previous state was state 1; l= -4 |
| At time t=4 for state 2 the most likely previous state was state 2; l= -2 |
| At time t=4 for state 3 the most likely previous state was state 4; l= -1 |
| At time t=4 for state 4 the most likely previous state was state 3; l= -2 |
| At time t=5 for state 1 the most likely previous state was state 1; l= -6 |
| At time t=5 for state 2 the most likely previous state was state 2; l= -3 |
| At time t=5 for state 3 the most likely previous state was state 4; l= -2 |
| At time t=5 for state 4 the most likely previous state was state 3; l= -1 |
| At time t=6 for state 1 the most likely previous state was state 1; l= -7 |
| At time t=6 for state 2 the most likely previous state was state 2; l= -3 |
| At time t=6 for state 3 the most likely previous state was state 4; l= -1 |
| At time t=6 for state 4 the most likely previous state was state 3; l= -3 |
| At time t=7 for state 1 the most likely previous state was state 1; l= -8 |
| At time t=7 for state 2 the most likely previous state was state 2; l= -4 |
| At time t=7 for state 3 the most likely previous state was state 4; l= -3 |
| At time t=7 for state 4 the most likely previous state was state 3; l= -2 |
| At time t=8 for state 1 the most likely previous state was state 1; l= -9 |
| At time t=8 for state 2 the most likely previous state was state 2; l= -4 |
| At time t=8 for state 3 the most likely previous state was state 4; l= -2 |
| At time t=8 for state 4 the most likely previous state was state 3; l= -3 |
| |

| B. THE MOST LIKELY ENDSTATE: |
|---|
| The most likely endstate at time t=8 is state 3 (likelyhood l= -2) |
| |

| C. TRACING BACK FROM THE MOST LIKELY ENDSTATE (STATE 3): |
|---|
| At time t=8 for state 3 the most likely previous state was state 4 |
| At time t=7 for state 4 the most likely previous state was state 3 |
| At time t=6 for state 3 the most likely previous state was state 4 |
| At time t=5 for state 4 the most likely previous state was state 3 |
| At time t=4 for state 3 the most likely previous state was state 4 |
| At time t=3 for state 4 the most likely previous state was state 3 |
| At time t=2 for state 3 the most likely previous state was state 1 |
| |

| SUMMARIZING, TRACING BACK FROM T=8 TO T=1 RESULTS INTO THE SEQUENCE: |
|---|
| State 3; State 4; State 3; State 4; State 3; State 4; State 3; State 1 |
| |

| THUS, THE MOST LIKELY STATE PATH FROM T=1 TO T=8 IS: |
|---|
| State 1; State 3; State 4; State 3; State 4; State 3; State 4; State 3 |

**Table 5:**

| Path identification model 1 according to novel process |
|---|
| MOST LIKELY PATH IDENTIFICATION OF MODEL 1 USING THE NEW ALGORITHM |
| BRANCH IDENTIFIERS: State 1; State 2 |
| A. THE MOST LIKELY BRANCH IDENTIFIERS AT TIMES 2 TO 8: |
| At time t=2 for state 1 the most likely branch identifier is state 1; l= -2 |
| At time t=2 for state 2 the most likely branch identifier is state 2; l= -1 |
| At time t=2 for state 3 the most likely branch identifier is state 1; l= -1 |
| At time t=3 for state 1 the most likely branch identifier is state 1; l= -3 |
| At time t=3 for state 2 the most likely branch identifier is state 2; l= -2 |
| At time t=3 for state 3 the most likely branch identifier is state 2; l= -2 |
| At time t=3 for state 4 the most likely branch identifier is state 1; l= -1 |
| At time t=4 for state 1 the most likely branch identifier is state 1; l= -4 |
| At time t=4 for state 2 the most likely branch identifier is state 2; l= -2 |
| At time t=4 for state 3 the most likely branch identifier is state 1; l= -1 |
| At time t=4 for state 4 the most likely branch identifier is state 2; l= -2 |
| At time t=5 for state 1 the most likely branch identifier is state 1; l= -6 |
| At time t=5 for state 2 the most likely branch identifier is state 2; l= -3 |
| At time t=5 for state 3 the most likely branch identifier is state 2; l= -2 |
| At time t=5 for state 4 the most likely branch identifier is state 1; l= -1 |
| At time t=6 for state 1 the most likely branch identifier is state 1; l= -7 |
| At time t=6 for state the most likely branch identifier is state 2; l= -3 |
| At time t=6 for state 3 the most likely branch identifier is state 1; l= -1 |
| At time t=6 for state 4 the most likely branch identifier is state 2; l= -3 |
| At time t=7 for state 1 the most likely branch identifier is state 1; l= -8 |
| At time t=7 for state 2 the most likely branch identifier is state 2; l= -4 |
| At time t=7 for state 3 the most likely branch identifier is state 2; l= -3 |
| At time t=7 for state 4 the most likely branch identifier is state 1; l= -2 |
| At time t=8 for state 1 the most likely branch identifier is state 1; l= -9 |
| At time t=8 for state 2 the most likely branch identifier is state 2; l= -4 |
| At time t=8 for state 3 the most likely branch identifier is state 1; l= -2 |
| At time t=8 for state 4 the most likely branch identifier is state 2; l= -3 |
| |

| B. THE MOST LIKELY ENDSTATE: |
|---|
| The most likely endstate at time t=8 is state 3 (likelyhood l= -2), for which the most likely branch identification state is state 1 |

**Table 6:**

| Path identification model 2 according to Viterbi process |
|---|
| MOST LIKELY STATE PATH OF MODEL 2 USING THE VITERBI ALGORITHM |
| A. THE MOST LIKELY PREVIOUS STATES AT TIMES 2 TO 8: |
| At time t=2 for state 1 the most likely previous state was state 1; l= -4 |
| At time t=2 for state 2 the most likely previous state was state 2; l= -4 |
| At time t=2 for state 3 the most likely previous state was state 3; l= -4 |
| At time t=2 for state 4 the most likely previous state was state 1; l= -1 |
| At time t=2 for state 5 the most likely previous state was state 2; l= -1 |
| At time t=2 for state 6 the most likely previous state was state 3; l= -1 |
| At time t=3 for state 1 the most likely previous state was state 1; l= -6 |
| At time t=3 for state the most likely previous state was state 2; l= -6 |
| At time t=3 for state 3 the most likely previous state was state 3; l= -6 |
| At time t=3 for state 4 the most likely previous state was state 4; l= -4 |
| At time t=3 for state 5 the most likely previous state was state 5; l= -4 |
| At time t=3 for state 6 the most likely previous state was state 6; l= -4 |
| At time t=3 for state 7 the most likely previous state was state 4; l= -1 |
| At time t=3 for state 8 the most likely previous state was state 5; l= -1 |
| At time t=3 for state 9 the most likely previous state was state 6; l= -1 |
| At time t=4 for state 1 the most likely previous state was state 1; l= -8 |
| At time t=4 for state 2 the most likely previous state was state 2; l= -8 |
| At time t=4 for state 3 the most likely previous state was state 3; l= -8 |
| At time t=4 for state 4 the most likely previous state was state 4; l= -6 |
| At time t=4 for state 5 the most likely previous state was state 5; l= -6 |
| At time t=4 for state 6 the most likely previous state was state 6; l= -6 |
| At time t=4 for state 7 the most likely previous state was state 7; l= -4 |
| At time t=4 for state 8 the most likely previous state was state 8; l= -4 |
| At time t=4 for state 9 the most likely previous state was state 9; l= -4 |
| At time t=4 for state 10 the most likely previous state was state 7; l= -2 |
| At time t=4 for state 11 the most likely previous state was state 8; l= -2 |
| At time t=4 for state 12 the most likely previous state was state 9; l= -2 |
| At time t=5 for state 1 the most likely previous state was state 1; l=-10 |
| At time t=5 for state 2 the most likely previous state was state 2; l=-10 |
| At time t=5 for state 3 the most likely previous state was state 3; l=-10 |
| At time t=5 for state 4 the most likely previous state was state 4; l= -8 |
| At time t=5 for state 5 the most likely previous state was state 5; l= -8 |
| At time t=5 for state 6 the most likely previous state was state 6; l= -8 |
| At time t=5 for state 7 the most likely previous state was state 7; l= -6 |
| At time t=5 for state 8 the most likely previous state was state 8; l= -6 |
| At time t=5 for state 9 the most likely previous state was state 9; l= -6 |
| At time t=5 for state 10 the most likely previous state was state 10; l= -4 |
| At time t=5 for state 11 the most likely previous state was state 11; l= -4 |
| At time t=5 for state 12 the most likely previous state was state 12; l= -4 |
| At time t=5 for state 13 the most likely previous state was state 12; l= -2 |
| At time t=6 for state 1 the most likely previous state was state 1; l=-13 |
| At time t=6 for state 2 the most likely previous state was state 2; l=-13 |
| At time t=6 for state 3 the most likely previous state was state 3; l=-13 |
| At time t=6 for state 4 the most likely previous state was state 4; l=-11 |
| At time t=6 for state 5 the most likely previous state was state 5; l=-11 |
| At time t=6 for state 6 the most likely previous state was state 6; l=-11 |
| At time t=6 for state 7 the most likely previous state was state 4; l= -8 |
| At time t=6 for state 8 the most likely previous state was state 5; l= -8 |
| At time t=6 for state 9 the most likely previous state was state 6; l= -8 |
| At time t=6 for state 10 the most likely previous state was state 10; l= -6 |
| At time t=6 for state 11 the most likely previous state was state 11; l= -6 |
| At time t=6 for state 12 the most likely previous state was state 12; l= -6 |
| At time t=6 for state 13 the most likely previous state was state 13; l= -4 |
| At time t=6 for state 14 the most likely previous state was state 13; l= -2 |
| At time t=7 for state 1 the most likely previous state was state 1; l=-15 |
| At time t=7 for state 2 the most likely previous state was state 2; l=-15 |
| At time t=7 for state 3 the most likely previous state was state 3; l=-15 |
| At time t=7 for state 4 the most likely previous state was state 4; l=-13 |
| At time t=7 for state 5 the most likely previous state was state 5; l=-13 |
| At time t=7 for state 6 the most likely previous state was state 6; l=-13 |
| At time t=7 for state 7 the most likely previous state was state 7; l=-11 |
| At time t=7 for state 8 the most likely previous state was state 8; l=-11 |
| At time t=7 for state 9 the most likely previous state was state 9; l=-11 |
| At time t=7 for state 10 the most likely previous state was state 7; l= -8 |
| At time t=7 for state 11 the most likely previous state was state 8; l= -8 |
| At time t=7 for state 12 the most likely previous state was state 9; l= -8 |
| At time t=7 for state 13 the most likely previous state was state 13; l= -6 |
| At time t=7 for state 14 the most likely previous state was state 13; l= -4 |
| At time t=7 for state 15 the most likely previous state was state 14; l= -2 |
| At time t=8 for state 1 the most likely previous state was state 1; l=-17 |
| At time t=8 for state 2 the most likely previous state was state 2; l=-17 |
| At time t=8 for state 3 the most likely previous state was state 3; l=-17 |
| At time t=8 for state 4 the most likely previous state was state 4; l=-15 |
| At time t=8 for state 5 the most likely previous state was state 5; l=-15 |
| At time t=8 for state 6 the most likely previous state was state 6; l=-15 |
| At time t=8 for state 7 the most likely previous state was state 7; l=-13 |
| At time t=8 for state 8 the most likely previous state was state 8; l=-13 |
| At time t=8 for state 9 the most likely previous state was state 9; l=-13 |
| At time t=8 for state 10 the most likely previous state was state 10; l=-11 |
| At time t=8 for state 11 the most likely previous state was state 11; l=-11 |
| At time t=8 for state 12 the most likely previous state was state 12; l=-11 |
| At time t=8 for state 13 the most likely previous state was state 12; l= -9 |
| At time t=8 for state 14 the most likely previous state was state 14; l= -6 |
| At time t=8 for state 15 the most likely previous state was state 15; l= -2 |
| |

| B. THE MOST LIKELY ENDSTATE: |
|---|
| The most likely endstate at time t=8 is state 15 (likelyhood l= -2) |
| |

| C. TRACING BACK FROM THE MOST LIKELY ENDSTATE (STATE 15): |
|---|
| At time t=8 for state 15 the most likely previous state was state 15 |
| At time t=7 for state 15 the most likely previous state was state 14 |
| At time t=6 for state 14 the most likely previous state was state 13 |
| At time t=5 for state 13 the most likely previous state was state 12 |
| At time t=4 for state 12 the most likely previous state was state 9 |
| At time t=3 for state 9 the most likely previous state was state 6 |
| At time t=2 for state 6 the most likely previous state was state 3 |
| |

| SUMMARIZING, TRACING BACK FROM T=8 TO T=1 RESULTS INTO THE SEQUENCE: |
|---|
| State 15; State 15; State 14; State 13; State 12; State 9; State 6; State 3 |

| THUS, THE MOST LIKELY STATE PATH FROM T=1 TO T=8 IS: |
|---|
| State 3; State 6; State 9; State 12; State 13; State 14; State 15; State 15 |

**Table 7:**

| Path identification model 2 according to novel process |
|---|
| MOST LIKELY PATH IDENTIFICATION OF MODEL 2 USING THE NEW ALGORITHM |
| BRANCH IDENTIFIERS: State 1; State 2; State 3 |
| A. THE MOST LIKELY BRANCH IDENTIFIERS AT TIMES 2 TO 8: |
| At time t=2 for state 1 the most likely branch identifier is state 1; l= -4 |
| At time t=2 for state 2 the most likely branch identifier is state 2; l= -4 |
| At time t=2 for state 3 the most likely branch identifier is state 3; l= -4 |
| At time t=2 for state 4 the most likely branch identifier is state 1; l= -1 |
| At time t=2 for state 5 the most likely branch identifier is state 2; l= -1 |
| At time t=2 for state 6 the most likely branch identifier is state 3; l= -1 |
| At time t=3 for state 1 the most likely branch identifier is state 1; l= -6 |
| At time t=3 for state 2 the most likely branch identifier is state 2; l= -6 |
| At time t=3 for state 3 the most likely branch identifier is state 3; l= -6 |
| At time t=3 for state 4 the most likely branch identifier is state 1; l= -4 |
| At time t=3 for state 5 the most likely branch identifier is state 2; l= -4 |
| At time t=3 for state 6 the most likely branch identifier is state 3; l= -4 |
| At time t=3 for state 7 the most likely branch identifier is state 1; l= -1 |
| At time t=3 for state 8 the most likely branch identifier is state 2; l= -1 |
| At time t=3 for state 9 the most likely branch identifier is state 3; l= -1 |
| At time t=4 for state 1 the most likely branch identifier is state 1; l= -8 |
| At time t=4 for state the most likely branch identifier is state 2; l= -8 |
| At time t=4 for state 3 the most likely branch identifier is state 3; l= -8 |
| At time t=4 for state 4 the most likely branch identifier is state 1; l= -6 |
| At time t=4 for state 5 the most likely branch identifier is state 2; l= -6 |
| At time t=4 for state 6 the most likely branch identifier is state 3; l= -6 |
| At time t=4 for state 7 the most likely branch identifier is state 1; l= -4 |
| At time t=4 for state 8 the most likely branch identifier is state 2; l= -4 |
| At time t=4 for state 9 the most likely branch identifier is state 3; l= -4 |
| At time t=4 for state 10 the most likely branch identifier is state 1; l= -2 |
| At time t=4 for state 11 the most likely branch identifier is state 2; l= -2 |
| At time t=4 for state 12 the most likely branch identifier is state 3; l= -2 |
| At time t=5 for state 1 the most likely branch identifier is state 1; l=-10 |
| At time t=5 for state 2 the most likely branch identifier is state 2; l=-10 |
| At time t=5 for state 3 the most likely branch identifier is state 3; l=-10 |
| At time t=5 for state 4 the most likely branch identifier is state 1; l= -8 |
| At time t=5 for state 5 the most likely branch identifier is state 2; l= -8 |
| At time t=5 for state 6 the most likely branch identifier is state 3; l= -8 |
| At time t=5 for state 7 the most likely branch identifier is state 1; l= -6 |
| At time t=5 for state 8 the most likely branch identifier is state 2; l= -6 |
| At time t=5 for state 9 the most likely branch identifier is state 3; l= -6 |
| At time t=5 for state 10 the most likely branch identifier is state 1; l= -4 |
| At time t=5 for state 11 the most likely branch identifier is state 2; l= -4 |
| At time t=5 for state 12 the most likely branch identifier is state 3; l= -4 |
| At time t=5 for state 13 the most likely branch identifier is state 3; l= -2 |
| At time t=6 for state 1 the most likely branch identifier is state 1; l=-13 |
| At time t=6 for state 2 the most likely branch identifier is state 2; l=-13 |
| At time t=6 for state 3 the most likely branch identifier is state 3; l=-13 |
| At time t=6 for state 4 the most likely branch identifier is state 1; l=-11 |
| At time t=6 for state 5 the most likely branch identifier is state 2; l=-11 |
| At time t=6 for state 6 the most likely branch identifier is state 3; l=-11 |
| At time t=6 for state 7 the most likely branch identifier is state 1; l= -8 |
| At time t=6 for state 8 the most likely branch identifier is state 2; l= -8 |
| At time t=6 for state 9 the most likely branch identifier is state 3; l= -8 |
| At time t=6 for state 10 the most likely branch identifier is state 1; l= -6 |
| At time t=6 for state 11 the most likely branch identifier is state 2; l= -6 |
| At time t=6 for state 12 the most likely branch identifier is state 3; l= -6 |
| At time t=6 for state 13 the most likely branch identifier is state 3; l= -4 |
| At time t=6 for state 14 the most likely branch identifier is state 3; l= -2 |
| At time t=7 for state 1 the most likely branch identifier is state 1; l=-15 |
| At time t=7 for state 2 the most likely branch identifier is state 2; l=-15 |
| At time t=7 for state 3 the most likely branch identifier is state 3; l=-15 |
| At time t=7 for state 4 the most likely branch identifier is state 1; l=-13 |
| At time t=7 for state 5 the most likely branch identifier is state 2; l=-13 |
| At time t=7 for state 6 the most likely branch identifier is state 3; l=-13 |
| At time t=7 for state 7 the most likely branch identifier is state 1; l=-11 |
| At time t=7 for state 8 the most likely branch identifier is state 2; l=-11 |
| At time t=7 for state 9 the most likely branch identifier is state 3; l=-11 |
| At time t=7 for state 10 the most likely branch identifier is state 1; l= -8 |
| At time t=7 for state 11 the most likely branch identifier is state 2; l= -8 |
| At time t=7 for state 12 the most likely branch identifier is state 3; l= -8 |
| At time t=7 for state 13 the most likely branch identifier is state 3; l= -6 |
| At time t=7 for state 14 the most likely branch identifier is state 3; l= -4 |
| At time t=7 for state 15 the most likely branch identifier is state 3; l= -2 |
| At time t=8 for state 1 the most likely branch identifier is state 1; l=-17 |
| At time t=8 for state 2 the most likely branch identifier is state 2; l=-17 |
| At time t=8 for state 3 the most likely branch identifier is state 3; l=-17 |
| At time t=8 for state 4 the most likely branch identifier is state 1; l=-15 |
| At time t=8 for state 5 the most likely branch identifier is state 2; l=-15 |
| At time t=8 for state 6 the most likely branch identifier is state 3; l=-15 |
| At time t=8 for state 7 the most likely branch identifier is state 1; l=-13 |
| At time t=8 for state 8 the most likely branch identifier is state 2; l=-13 |
| At time t=8 for state 9 the most likely branch identifier is state 3; l=-13 |
| At time t=8 for state 10 the most likely branch identifier is state 1; l=-11 |
| At time t=8 for state 11 the most likely branch identifier is state 2; l=-11 |
| At time t=8 for state 12 the most likely branch identifier is state 3; l=-11 |
| At time t=8 for state 13 the most likely branch identifier is state 3; l= -9 |
| At time t=8 for state 14 the most likely branch identifier is state 3; l= -6 |
| At time t=8 for state 15 the most likely branch identifier is state 3; l= -2 |
| |

| B. THE MOST LIKELY ENDSTATE: |
|---|
| The most likely endstate at time t=8 is state 15 (likelyhood l= -2), for which the most likely branch identification state is state 3 |

**Table 8:**

| Recognition model according to Viterbi process |
|---|
| MOST LIKELY STATE PATH OF MODEL 2 FOR OBSERVATION ZZXYYZXX USING THE VITERBI ALGORITHM |
| A. THE MOST LIKELY PREVIOUS STATES AT TIMES 2 TO 8: |
| At time t=2 for state 1 the most likely previous state was state 1; l= -8 |
| At time t=2 for state 2 the most likely previous state was state 2; l= -8 |
| At time t=2 for state 3 the most likely previous state was state 3; l= -4 |
| At time t=2 for state 4 the most likely previous state was state 1; l= -5 |
| At time t=2 for state 5 the most likely previous state was state 2; l= -5 |
| At time t=2 for state 6 the most likely previous state was state 3; l= -2 |
| At time t=3 for state 1 the most likely previous state was state 1; l=-11 |
| At time t=3 for state the most likely previous state was state 2; l=-13 |
| At time t=3 for state 3 the most likely previous state was state 3; l= -9 |
| At time t=3 for state 4 the most likely previous state was state 4; l= -8 |
| At time t=3 for state 5 the most likely previous state was state 5; l= -8 |
| At time t=3 for state 6 the most likely previous state was state 3; l= -5 |
| At time t=3 for state 7 the most likely previous state was state 4; l= -6 |
| At time t=3 for state 8 the most likely previous state was state 5; l= -7 |
| At time t=3 for state 9 the most likely previous state was state 6; l= -4 |
| At time t=4 for state 1 the most likely previous state was state 1; l=-15 |
| At time t=4 for state 2 the most likely previous state was state 2; l=-15 |
| At time t=4 for state 3 the most likely previous state was state 3; l=-13 |
| At time t=4 for state 4 the most likely previous state was state 4; l=-12 |
| At time t=4 for state 5 the most likely previous state was state 5; l=-12 |
| At time t=4 for state 6 the most likely previous state was state 6; l= -9 |
| At time t=4 for state 7 the most likely previous state was state 7; l= -9 |
| At time t=4 for state 8 the most likely previous state was state 5; l= -9 |
| At time t=4 for state 9 the most likely previous state was state 6; l= -7 |
| At time t=4 for state 10 the most likely previous state was state 7; l= -8 |
| At time t=4 for state 11 the most likely previous state was state 8; l= -9 |
| At time t=4 for state 12 the most likely previous state was state 9; l= -4 |
| At time t=5 for state 1 the most likely previous state was state 1; l=-20 |
| At time t=5 for state 2 the most likely previous state was state 2; l=-18 |
| At time t=5 for state 3 the most likely previous state was state 3; l=-18 |
| At time t=5 for state 4 the most likely previous state was state 4; l=-15 |
| At time t=5 for state 5 the most likely previous state was state 5; l=-15 |
| At time t=5 for state 6 the most likely previous state was state 6; l=-12 |
| At time t=5 for state 7 the most likely previous state was state 7; l=-13 |
| At time t=5 for state 8 the most likely previous state was state 8; l=-12 |
| At time t=5 for state 9 the most likely previous state was state 6; l=-10 |
| At time t=5 for state 10 the most likely previous state was state 7; l=-12 |
| At time t=5 for state 11 the most likely previous state was state 8; l=-12 |
| At time t=5 for state 12 the most likely previous state was state 12; l= -7 |
| At time t=5 for state 13 the most likely previous state was state 12; l= -5 |
| At time t=6 for state 1 the most likely previous state was state 1; l=-24 |
| At time t=6 for state 2 the most likely previous state was state 2; l=-22 |
| At time t=6 for state 3 the most likely previous state was state 3; l=-20 |
| At time t=6 for state 4 the most likely previous state was state 4; l=-19 |
| At time t=6 for state 5 the most likely previous state was state 5; l=-18 |
| At time t=6 for state 6 the most likely previous state was state 6; l=-15 |
| At time t=6 for state 7 the most likely previous state was state 7; l=-17 |
| At time t=6 for state 8 the most likely previous state was state 8; l=-16 |
| At time t=6 for state 9 the most likely previous state was state 6; l=-13 |
| At time t=6 for state 10 the most likely previous state was state 7; l=-13 |
| At time t=6 for state 11 the most likely previous state was state 8; l=-15 |
| At time t=6 for state 12 the most likely previous state was state 12; l=-11 |
| At time t=6 for state 13 the most likely previous state was state 12; l= -8 |
| At time t=6 for state 14 the most likely previous state was state 13; l= -7 |
| At time t=7 for state 1 the most likely previous state was state 1; l=-27 |
| At time t=7 for state 2 the most likely previous state was state 2; l=-27 |
| At time t=7 for state 3 the most likely previous state was state 3; l=-25 |
| At time t=7 for state 4 the most likely previous state was state 4; l=-22 |
| At time t=7 for state 5 the most likely previous state was state 5; l=-22 |
| At time t=7 for state 6 the most likely previous state was state 6; l=-19 |
| At time t=7 for state 7 the most likely previous state was state 4; l=-19 |
| At time t=7 for state 8 the most likely previous state was state 8; l=-20 |
| At time t=7 for state 9 the most likely previous state was state 9; l=-17 |
| At time t=7 for state 10 the most likely previous state was state 10; l=-18 |
| At time t=7 for state 11 the most likely previous state was state 8; l=-16 |
| At time t=7 for state 12 the most likely previous state was state 9; l=-15 |
| At time t=7 for state 13 the most likely previous state was state 13; l=-11 |
| At time t=7 for state 14 the most likely previous state was state 13; l= -9 |
| At time t=7 for state 15 the most likely previous state was state 14; l= -8 |
| At time t=8 for state 1 the most likely previous state was state 1; l=-30 |
| At time t=8 for state the most likely previous state was state 2; l=-32 |
| At time t=8 for state 3 the most likely previous state was state 3; l=-30 |
| At time t=8 for state 4 the most likely previous state was state 4; l=-25 |
| At time t=8 for state 5 the most likely previous state was state 5; l=-25 |
| At time t=8 for state 6 the most likely previous state was state 6; l=-23 |
| At time t=8 for state 7 the most likely previous state was state 7; l=-22 |
| At time t=8 for state 8 the most likely previous state was state 8; l=-23 |
| At time t=8 for state 9 the most likely previous state was state 9; l=-20 |
| At time t=8 for state 10 the most likely previous state was state 7; l=-22 |
| At time t=8 for state 11 the most likely previous state was state 11; l=-18 |
| At time t=8 for state 12 the most likely previous state was state 9; l=-19 |
| At time t=8 for state 13 the most likely previous state was state 13; l=-15 |
| At time t=8 for state 14 the most likely previous state was state 14; l=-13 |
| At time t=8 for state 15 the most likely previous state was state 15; l= -9 |
| |

| B. THE MOST LIKELY ENDSTATE: |
|---|
| The most likely endstate at time t=8 is state 15 (likelyhood l= -9) |
| |

| C. TRACING BACK FROM THE MOST LIKELY ENDSTATE (STATE 15): |
|---|
| At time t=8 for state 15 the most likely previous state was state 15 |
| At time t=7 for state 15 the most likely previous state was state 14 |
| At time t=6 for state 14 the most likely previous state was state 13 |
| At time t=5 for state 13 the most likely previous state was state 12 |
| At time t=4 for state 12 the most likely previous state was state 9 |
| At time t=3 for state 9 the most likely previous state was state 6 |
| At time t=2 for state 6 the most likely previous state was state 3 |
| |

| SUMMARIZING, TRACING BACK FROM T=8 TO T=1 RESULTS INTO THE SEQUENCE: |
|---|
| State 15; State 15; State 14; State 13; State 12; State 9; State 6; State 3 |

| THUS, THE MOST LIKELY STATE PATH FROM T=1 TO T=8 FOR OBSERVATION ZZXYYZXX IS: |
|---|
| State 3; State 6; State 9; State 12; State 13; State 14; State 15; State 15 |

**Table 9:**

| Recognition model 2 according to novel process |
|---|
| MOST LIKELY PATH IDENTIFICATION OF MODEL 2 FOR OBSERVATION ZZXYYZXX USING THE NEW ALGORITHM |
| BRANCH IDENTIFIERS: State 1; State 2; State 3 |
| A. THE MOST LIKELY BRANCH IDENTIFIERS AT TIMES 2 TO 8: |
| At time t=2 for state 1 the most likely branch identifier is state 1; l= -8 |
| At time t=2 for state 2 the most likely branch identifier is state 2; l= -8 |
| At time t=2 for state 3 the most likely branch identifier is state 3; l= -4 |
| At time t=2 for state 4 the most likely branch identifier is state 1; l= -5 |
| At time t=2 for state 5 the most likely branch identifier is state 2; l= -5 |
| At time t=2 for state 6 the most likely branch identifier is state 3; l= -2 |
| At time t=3 for state 1 the most likely branch identifier is state 1; l=-11 |
| At time t=3 for state 2 the most likely branch identifier is state 2; l=-13 |
| At time t=3 for state 3 the most likely branch identifier is state 3; l= -9 |
| At time t=3 for state 4 the most likely branch identifier is state 1; l= -8 |
| At time t=3 for state 5 the most likely branch identifier is state 2; l= -8 |
| At time t=3 for state 6 the most likely branch identifier is state 3; l= -5 |
| At time t=3 for state 7 the most likely branch identifier is state 1; l= -6 |
| At time t=3 for state 8 the most likely branch identifier is state 2; l= -7 |
| At time t=3 for state 9 the most likely branch identifier is state 3; l= -4 |
| At time t=4 for state 1 the most likely branch identifier is state 1; l=-15 |
| At time t=4 for state 2 the most likely branch identifier is state 2; l=-15 |
| At time t=4 for state 3 the most likely branch identifier is state 3; l=-13 |
| At time t=4 for state 4 the most likely branch identifier is state 1; l=-12 |
| At time t=4 for state 5 the most likely branch identifier is state 2; l=-12 |
| At time t=4 for state 6 the most likely branch identifier is state 3; l= -9 |
| At time t=4 for state 7 the most likely branch identifier is state 1; l= -9 |
| At time t=4 for state 8 the most likely branch identifier is state 2; l= -9 |
| At time t=4 for state 9 the most likely branch identifier is state 3; l= -7 |
| At time t=4 for state 10 the most likely branch identifier is state 1; l= -8 |
| At time t=4 for state 11 the most likely branch identifier is state 2; l= -9 |
| At time t=4 for state 12 the most likely branch identifier is state 3; l= -4 |
| At time t=5 for state 1 the most likely branch identifier is state 1; l=-20 |
| At time t=5 for state 2 the most likely branch identifier is state 2; l=-18 |
| At time t=5 for state 3 the most likely branch identifier is state 3; l=-18 |
| At time t=5 for state 4 the most likely branch identifier is state 1; l=-15 |
| At time t=5 for state 5 the most likely branch identifier is state 2; l=-15 |
| At time t=5 for state 6 the most likely branch identifier is state 3; l=-12 |
| At time t=5 for state 7 the most likely branch identifier is state 1; l=-13 |
| At time t=5 for state 8 the most likely branch identifier is state 2; l=-12 |
| At time t=5 for state 9 the most likely branch identifier is state 3; l=-10 |
| At time t=5 for state 10 the most likely branch identifier is state 1; l=-12 |
| At time t=5 for state 11 the most likely branch identifier is state 2; l=-12 |
| At time t=5 for state 12 the most likely branch identifier is state 3; l= -7 |
| At time t=5 for state 13 the most likely branch identifier is state 3; l= -5 |
| At time t=6 for state 1 the most likely branch identifier is state 1; l=-24 |
| At time t=6 for state 2 the most likely branch identifier is state 2; l=-22 |
| At time t=6 for state 3 the most likely branch identifier is state 3; l=-20 |
| At time t=6 for state 4 the most likely branch identifier is state 1; l=-19 |
| At time t=6 for state 5 the most likely branch identifier is state 2; l=-18 |
| At time t=6 for state 6 the most likely branch identifier is state 3; l=-15 |
| At time t=6 for state 7 the most likely branch identifier is state 1; l=-17 |
| At time t=6 for state 8 the most likely branch identifier is state 2; l=-16 |
| At time t=6 for state 9 the most likely branch identifier is state 3; l=-13 |
| At time t=6 for state 10 the most likely branch identifier is state 1; l=-13 |
| At time t=6 for state 11 the most likely branch identifier is state 2; l=-15 |
| At time t=6 for state 12 the most likely branch identifier is state 3; l=-11 |
| At time t=6 for state 13 the most likely branch identifier is state 3; l= -8 |
| At time t=6 for state 14 the most likely branch identifier is state 3; l= -7 |
| At time t=7 for state 1 the most likely branch identifier is state 1; l=-27 |
| At time t=7 for state 2 the most likely branch identifier is state 2; l=-27 |
| At time t=7 for state 3 the most likely branch identifier is state 3; l=-25 |
| At time t=7 for state 4 the most likely branch identifier is state 1; l=-22 |
| At time t=7 for state 5 the most likely branch identifier is state 2; l=-22 |
| At time t=7 for state 6 the most likely branch identifier is state 3; l=-19 |
| At time t=7 for state 7 the most likely branch identifier is state 1; l=-19 |
| At time t=7 for state 8 the most likely branch identifier is state 2; l=-20 |
| At time t=7 for state 9 the most likely branch identifier is state 3; l=-17 |
| At time t=7 for state 10 the most likely branch identifier is state 1; l=-18 |
| At time t=7 for state 11 the most likely branch identifier is state 2; l=-16 |
| At time t=7 for state 12 the most likely branch identifier is state 3; l=-15 |
| At time t=7 for state 13 the most likely branch identifier is state 3; l=-11 |
| At time t=7 for state 14 the most likely branch identifier is state 3; l= -9 |
| At time t=7 for state 15 the most likely branch identifier is state 3; l= -8 |
| At time t=8 for state 1 the most likely branch identifier is state 1; l=-30 |
| At time t=8 for state 2 the most likely branch identifier is state 2; l=-32 |
| At time t=8 for state 3 the most likely branch identifier is state 3; l=-30 |
| At time t=8 for state 4 the most likely branch identifier is state 1; l=-25 |
| At time t=8 for state 5 the most likely branch identifier is state 2; l=-25 |
| At time t=8 for state 6 the most likely branch identifier is state 3; l=-23 |
| At time t=8 for state 7 the most likely branch identifier is state 1; l=-22 |
| At time t=8 for state 8 the most likely branch identifier is state 2; l=-23 |
| At time t=8 for state 9 the most likely branch identifier is state 3; l=-20 |
| At time t=8 for state 10 the most likely branch identifier is state 1; l=-22 |
| At time t=8 for state 11 the most likely branch identifier is state 2; l=-18 |
| At time t=8 for state 12 the most likely branch identifier is state 3; l=-19 |
| At time t=8 for state 13 the most likely branch identifier is state 3; l=-15 |
| At time t=8 for state 14 the most likely branch identifier is state 3; l=-13 |
| At time t=8 for state 15 the most likely branch identifier is state 3; l= -9 |
| |

| B. THE MOST LIKELY ENDSTATE: |
|---|
| The most likely endstate at time t=8 is state 15 (likelyhood l= -9) for which the most likely path identification state is state 3 |

**Table 10:**

| Path identification model 1 according to novel process with cluster identifiers |
|---|
| MOST LIKELY PATH IDENTIFICATION OF MODEL 1 USING THE NEW ALGORITHM |
| CLUSTER IDENTIFIERS: |
| State 1 has cluster identifier A |
| State 2 has cluster identifier B |

| A. THE MOST LIKELY CLUSTER IDENTIFIERS AT TIMES 2 TO 8: |
|---|
| At time t=2 for state 1 the most likely cluster identifier is A; l= -2 |
| At time t=2 for state 2 the most likely cluster identifier is B; l= -1 |
| At time t=2 for state 3 the most likely cluster identifier is A; l= -1 |
| At time t=3 for state 1 the most likely cluster identifier is A; l= -3 |
| At time t=3 for state 2 the most likely cluster identifier is B; l= -2 |
| At time t=3 for state 3 the most likely cluster identifier is B; l= -2 |
| At time t=3 for state 4 the most likely cluster identifier is A; l= -1 |
| At time t=4 for state 1 the most likely cluster identifier is A; l= -4 |
| At time t=4 for state 2 the most likely cluster identifier is B; l= -2 |
| At time t=4 for state 3 the most likely cluster identifier is A; l= -1 |
| At time t=4 for state 4 the most likely cluster identifier is B; l= -2 |
| At time t=5 for state 1 the most likely cluster identifier is A; l= -6 |
| At time t=5 for state 2 the most likely cluster identifier is B; l= -3 |
| At time t=5 for state 3 the most likely cluster identifier is B; l= -2 |
| At time t=5 for state 4 the most likely cluster identifier is A; l= -1 |
| At time t=6 for state 1 the most likely cluster identifier is A; l= -7 |
| At time t=6 for state 2 the most likely cluster identifier is B; l= -3 |
| At time t=6 for state 3 the most likely cluster identifier is A; l= -1 |
| At time t=6 for state 4 the most likely cluster identifier is B; l= -3 |
| At time t=7 for state 1 the most likely cluster identifier is A; l= -8 |
| At time t=7 for state 2 the most likely cluster identifier is B; l= -4 |
| At time t=7 for state 3 the most likely cluster identifier is B; l= -3 |
| At time t=7 for state 4 the most likely cluster identifier is A; l= -2 |
| At time t=8 for state 1 the most likely cluster identifier is A; l= -9 |
| At time t=8 for state 2 the most likely cluster identifier is B; l= -4 |
| At time t=8 for state 3 the most likely cluster identifier is A; l= -2 |
| At time t=8 for state 4 the most likely cluster identifier is B; l= -3 |
| |

| B. THE MOST LIKELY ENDSTATE: |
|---|
| The most likely endstate at time t=8 is state 3 (likelyhood l= -2), for which the most likely cluster identifier is A |

**Table 11:**

| Path identification model 2 according to novel process with cluster identifiers |
|---|
| MOST LIKELY PATH IDENTIFICATION OF MODEL 2 USING THE NEW ALGORITHM |
| CLUSTER IDENTIFIERS: |
| State 1 has cluster identifier A |
| State 2 has cluster identifier B |
| State 3 has cluster identifier C |
| State 4 has cluster identifier A |
| State 5 has cluster identifier B |
| State 6 has cluster identifier C |
| State 7 has cluster identifier A |
| State 8 has cluster identifier B |
| State 9 has cluster identifier C |
| State 10 has cluster identifier A |
| State 11 has cluster identifier B |
| State 12 has cluster identifier C |
| |

| A. THE MOST LIKELY CLUSTER IDENTIFIERS AT TIMES 2 TO 8: |
|---|
| At time t=2 for state 1 the most likely cluster identifier is A; l= -4 |
| At time t=2 for state 2 the most likely cluster identifier is B; l= -4 |
| At time t=2 for state 3 the most likely cluster identifier is C; l= -4 |
| At time t=2 for state 4 the most likely cluster identifier is A; l= -1 |
| At time t=2 for state 5 the most likely cluster identifier is B; l= -1 |
| At time t=2 for state 6 the most likely cluster identifier is C; l= -1 |
| At time t=3 for state 1 the most likely cluster identifier is A; l= -6 |
| At time t=3 for state 2 the most likely cluster identifier is B; l= -6 |
| At time t=3 for state 3 the most likely cluster identifier is C; l= -6 |
| At time t=3 for state 4 the most likely cluster identifier is A; l= -4 |
| At time t=3 for state 5 the most likely cluster identifier is B; l= -4 |
| At time t=3 for state 6 the most likely cluster identifier is C; l= -4 |
| At time t=3 for state 7 the most likely cluster identifier is A; l= -1 |
| At time t=3 for state 8 the most likely cluster identifier is B; l= -1 |
| At time t=3 for state 9 the most likely cluster identifier is C; l= -1 |
| At time t=4 for state 1 the most likely cluster identifier is A; l= -8 |
| At time t=4 for state 2 the most likely cluster identifier is B; l= -8 |
| At time t=4 for state 3 the most likely cluster identifier is C; l= -8 |
| At time t=4 for state 4 the most likely cluster identifier is A; l= -6 |
| At time t=4 for state 5 the most likely cluster identifier is B; l= -6 |
| At time t=4 for state 6 the most likely cluster identifier is C; l= -6 |
| At time t=4 for state 7 the most likely cluster identifier is A; l= -4 |
| At time t=4 for state 8 the most likely cluster identifier is B; l= -4 |
| At time t=4 for state 9 the most likely cluster identifier is C; l= -4 |
| At time t=4 for state 10 the most likely cluster identifier is A; l= -2 |
| At time t=4 for state 11 the most likely cluster identifier is B; l= -2 |
| At time t=4 for state 12 the most likely cluster identifier is C; l= -2 |
| At time t=5 for state 1 the most likely cluster identifier is A; l=-10 |
| At time t=5 for state 2 the most likely cluster identifier is B; l=-10 |
| At time t=5 for state 3 the most likely cluster identifier is C; l=-10 |
| At time t=5 for state 4 the most likely cluster identifier is A; l= -8 |
| At time t=5 for state 5 the most likely cluster identifier is B; l= -8 |
| At time t=5 for state 6 the most likely cluster identifier is C; l= -8 |
| At time t=5 for state 7 the most likely cluster identifier is A; l= -6 |
| At time t=5 for state 8 the most likely cluster identifier is B; l= -6 |
| At time t=5 for state 9 the most likely cluster identifier is C; l= -6 |
| At time t=5 for state 10 the most likely cluster identifier is A; l= -4 |
| At time t=5 for state 11 the most likely cluster identifier is B; l= -4 |
| At time t=5 for state 12 the most likely cluster identifier is C; l= -4 |
| At time t=5 for state 13 the most likely cluster identifier is C; l= -2 |
| At time t=6 for state 1 the most likely cluster identifier is A; l=-13 |
| At time t=6 for state 2 the most likely cluster identifier is B; l=-13 |
| At time t=6 for state 3 the most likely cluster identifier is C; l=-13 |
| At time t=6 for state 4 the most likely cluster identifier is A; l=-11 |
| At time t=6 for state 5 the most likely cluster identifier is B; l=-11 |
| At time t=6 for state 6 the most likely cluster identifier is C; l=-11 |
| At time t=6 for state 7 the most likely cluster identifier is A; l= -8 |
| At time t=6 for state 8 the most likely cluster identifier is B; l= -8 |
| At time t=6 for state 9 the most likely cluster identifier is C; l= -8 |
| At time t=6 for state 10 the most likely cluster identifier is A; l= -6 |
| At time t=6 for state 11 the most likely cluster identifier is B; l= -6 |
| At time t=6 for state 12 the most likely cluster identifier is C; l= -6 |
| At time t=6 for state 13 the most likely cluster identifier is C; l= -4 |
| At time t=6 for state 14 the most likely cluster identifier is C; l= -2 |
| At time t=7 for state 1 the most likely cluster identifier is A; l=-15 |
| At time t=7 for state 2 the most likely cluster identifier is B; l=-15 |
| At time t=7 for state 3 the most likely cluster identifier is C; l=-15 |
| At time t=7 for state 4 the most likely cluster identifier is A; l=-13 |
| At time t=7 for state 5 the most likely cluster identifier is B; l=-13 |
| At time t=7 for state 6 the most likely cluster identifier is C; l=-13 |
| At time t=7 for state 7 the most likely cluster identifier is A; l=-11 |
| At time t=7 for state 8 the most likely cluster identifier is B; l=-11 |
| At time t=7 for state 9 the most likely cluster identifier is C; l=-11 |
| At time t=7 for state 10 the most likely cluster identifier is A; l= -8 |
| At time t=7 for state 11 the most likely cluster identifier is B; l= -8 |
| At time t=7 for state 12 the most likely cluster identifier is C; l= -8 |
| At time t=7 for state 13 the most likely cluster identifier is C; l= -6 |
| At time t=7 for state 14 the most likely cluster identifier is C; l= -4 |
| At time t=7 for state 15 the most likely cluster identifier is C; l= -2 |
| At time t=8 for state 1 the most likely cluster identifier is A; l=-17 |
| At time t=8 for state 2 the most likely cluster identifier is B; l=-17 |
| At time t=8 for state 3 the most likely cluster identifier is C; l=-17 |
| At time t=8 for state 4 the most likely cluster identifier is A; l=-15 |
| At time t=8 for state 5 the most likely cluster identifier is B; l=-15 |
| At time t=8 for state 6 the most likely cluster identifier is C; l=-15 |
| At time t=8 for state 7 the most likely cluster identifier is A; l=-13 |
| At time t=8 for state 8 the most likely cluster identifier is B; l=-13 |
| At time t=8 for state 9 the most likely cluster identifier is C; l=-13 |
| At time t=8 for state 10 the most likely cluster identifier is A; l=-11 |
| At time t=8 for state 11 the most likely cluster identifier is B; l=-11 |
| At time t=8 for state 12 the most likely cluster identifier is C; l=-11 |
| At time t=8 for state 13 the most likely cluster identifier is C; l= -9 |
| At time t=8 for state 14 the most likely cluster identifier is C; l= -6 |
| At time t=8 for state 15 the most likely cluster identifier is C; l= -2 |
| |

| B. THE MOST LIKELY ENDSTATE: |
|---|
| The most likely endstate at time t=8 is state 15 (likelyhood l= -2), |
| for which the most likely cluster identifier is C |

**Table 11a:**

| Path identification model 2 according to novel process with selected end state 15 |
|---|
| MOST LIKELY PATH IDENTIFICATION OF MODEL 2 USING THE NEW ALGORITHM |
| CLUSTER IDENTIFIERS: |
| State 1 has cluster identifier A |
| State 2 has cluster identifier B |
| State 3 has cluster identifier C |
| State 4 has cluster identifier A |
| State 5 has cluster identifier B |
| State 6 has cluster identifier C |
| State 7 has cluster identifier A |
| State 8 has cluster identifier B |
| State 9 has cluster identifier C |
| State 10 has cluster identifier A |
| State 11 has cluster identifier B |
| State 12 has cluster identifier C |
| |

| A. THE MOST LIKELY CLUSTER IDENTIFIERS AT TIMES 2 TO 8: |
|---|
| At time t=2 for state 15 the most likely cluster identifier is ; l=-58 |
| At time t=3 for state 15 the most likely cluster identifier is ; l=-58 |
| At time t=4 for state 15 the most likely cluster identifier is ; l=-58 |
| At time t=5 for state 15 the most likely cluster identifier is ; l=-58 |
| At time t=6 for state 15 the most likely cluster identifier is ; l=-58 |
| At time t=7 for state 15 the most likely cluster identifier is C; l= -2 |
| At time t=8 for state 15 the most likely cluster identifier is C; l= -2 |
| |

| B. THE SELECTED ENDSTATE: |
|---|
| The selected endstate is state 15 , for which the most likely cluster identifier is C |

**Table 11b:**

| Path identification model 2 according to novel process with selected end state 10 |
|---|
| MOST LIKELY PATH IDENTIFICATION OF MODEL 2 USING THE NEW ALGORITHM |
| CLUSTER IDENTIFIERS: |
| State 1 has cluster identifier A |
| State 2 has cluster identifier B |
| State 3 has cluster identifier C |
| State 4 has cluster identifier A |
| State 5 has cluster identifier B |
| State 6 has cluster identifier C |
| State 7 has cluster identifier A |
| State 8 has cluster identifier B |
| State 9 has cluster identifier C |
| State 10 has cluster identifier A |
| State 11 has cluster identifier B |
| State 12 has cluster identifier C |
| |

| A. THE MOST LIKELY CLUSTER IDENTIFIERS AT TIMES 2 TO 8: |
|---|
| At time t=2 for state 10 the most likely cluster identifier is ; l=-58 |
| At time t=3 for state 10 the most likely cluster identifier is ; l=-58 |
| At time t=4 for state 10 the most likely cluster identifier is A; l= -2 |
| At time t=5 for state 10 the most likely cluster identifier is A; l= -4 |
| At time t=6 for state 10 the most likely cluster identifier is A; l= -6 |
| At time t=7 for state 10 the most likely cluster identifier is A; l= -8 |
| At time t=8 for state 10 the most likely cluster identifier is A; l=-11 |
| |

| B. THE SELECTED ENDSTATE: |
|---|
| The selected endstate is state 10 , for which the most likely cluster identifier is A |

**Table 12:**

| Demonstration program path identification according to Viterbi process |
|---|
| 100 REM SAVE"PATH.VIT",a |
| 110 DIM |
| A(20,20),B(20,20),D(20,20),DM(20,20),IM(20,20),JM(20,20),O(20),O$(20),PS(20) |
| 120 NR$="1" |
| 130 N$="":N=0 |
| 140 MODEL$="MARKOV"+NR$: PRINT MODEL$ |
| 150 REM ------------------------------- |
| 160 OPEN MODEL$+".MX1" FOR INPUT AS#1 |
| 170 INPUT#1,L$ |
| 180 S=VAL(RIGHT$(L$,3)):TS=8 |
| 190 INPUT#1,I |
| 200 FOR J=1 TO S |
| 210 INPUT#1,A(I,J) |
| 220 NEXT J |
| 230 IF NOT EOF(1) GOTO 190 |
| 240 CLOSE#1 |
| 250 REM ------------------------------- |
| 260 PR$="MARKOV"+NR$+".PVI" |
| 270 OPEN PR$ FOR OUTPUT AS#2 |
| 280 PRINT#2, USING"MOST LIKELY STATE PATH OF MODEL & USING THE VITERBI ALGORITHM";NR$ |
| 290 FOR J=1 TO S |
| 300 DM(1,J)=A(0,J) |
| 310 NEXT J |
| 320 FOR T=2 TO TS |
| 330 FOR J=1 TO S |
| 340 DM=0 |
| 350 FOR I=1 TO S |
| 360 D(T,J)=DM(T-1,I)*A(I,J) |
| 370 IF D(T,J)=>DM THEN DM=D(T,J):IM=I:JM=J |
| 380 DM(T,J)=DM |
| 390 IM(T,J)=IM |
| 400 JM(T,J)=JM |
| 410 NEXT I |
| 420 NEXT J |
| 430 NEXT T |
| 440 PRINT#2,"":PRINT#2, USING "A. THE MOST LIKELY PREVIOUS STATES AT TIMES 2 TO #:";TS |
| 450 FOR T=2 TO TS |
| 460 DM=0 |
| 470 FOR J=1 TO S |
| 480 IF DM(T,J)=>DM THEN DM=DM(T,J):IM=IM(T,J):JM=JM(T,J) |
| 490 IF DM(T,J)<>0 THEN PRINT#2, USING "At time t=# for state ## the most likely previous state was state ##; |
| l=+##";T;JM(T,J);IM(T,J);LOG(DM(T,J)) |
| 500 NEXT J |
| 510 IF T=TS GOTO 530 |
| 520 NEXT T |
| 530 PRINT#2,"":PRINT#2,"B. THE MOST LIKELY ENDSTATE:" |
| 540 PRINT#2, USING "The most likely endstate at time t=# is state ## |
| (likelyhood l=+##)";T;JM;LOG(DM) |
| 550 PS=IM |
| 560 PRINT#2,"":PRINT#2, USING"C. TRACING BACK FROM THE MOST LIKELY ENDSTATE (STATE ##):";JM |
| 570 PS=JM:N=N+1:PS(N)=PS |
| 580 FOR T=TS TO 2 STEP -1 |
| 590 FOR J=1 TO S |
| 600 IF J=PS THEN PS=IM(T,J): N=N+1:PS(N)=PS:GOTO 620 |
| 610 NEXT J |
| 620 PRINT#2, USING "At time t=# for state ## the most likely previous state was state ##";T;J;PS |
| 630 NEXT T |
| 640 PRINT#2,"":PRINT#2, USING "SUMMARIZING, TRACING BACK FROM T=# TO T=# RESULTS INTO THE SEQUENCE:";TS;1 |
| 650 FOR M=1 TO N |
| 660 PRINT#2, USING "State ##";PS(M); |
| 670 IF M<N THEN PRINT#2, "; "; |
| 680 NEXT M |
| 690 PRINT#2,"":PRINT#2,"":PRINT#2, USING"THUS, THE MOST LIKELY STATE PATH FROM T=# TO T=# IS:";1;TS |
| 700 FOR M=N TO 1 STEP -1 |
| 710 PRINT#2, USING "State ##";PS(M); |
| 720 IF M>1 THEN PRINT#2, "; "; |
| 730 NEXT M |
| 740 CLOSE |
| 750 IF NR$="2" THEN RUN "PATH.INV" |
| 760 NR$="2": GOTO 130 |

**Table 13:**

| Demonstration program path identification according to novel process |
|---|
| 100 REM SAVE"PATH.INV",a |
| 110 DIM |
| A(20,20),B(20,20),D(20,20),DM(20,20),IM(20,20),JM(20,20),O(20),O$(20),PS(20),S(20),SS(20,20):N$="":N=0 |
| 120 NR$="1" |
| 130 C=0:N$="":N=0 |
| 140 MODEL$="MARKOV"+NR$: PRINT AIODEL$ |
| 150 REM ------------------------------- |
| 160 OPEN MODEL$+".MX1" FOR INPUT AS#1 |
| 170 INPUT#1,L$ |
| 180 S=VAL(RIGHT$(L$,3)):TS=8 |
| 190 INPUT#1,I |
| 200 FOR J=1 TO S |
| 210 INPUT#1,A(I,J) |
| 220 NEXT J |
| 230 IF NOT EOF(1) GOTO 190 |
| 240 CLOSE#1 |
| 250 REM ------------------------------- |
| 260 OPEN MODEL$+".SET" FOR INPUT AS#1 |
| 270 C=C+1:INPUT#1,S(C |
| 280 IF NOT EOF(1) GOTO 270 |
| 290 CLOSE#1 |
| 300 REM ------------------------------- |
| 310 PR$="MARKOV"+NR$+".PIV" |
| 320 OPEN PR$ FOR OUTPUT AS#2 |
| 330 PRINT#2,"" |
| 340 PRINT#2, USING"MOST LIKELY PATH IDENTIFICATION OF MODEL & USING THE NEW ALGORITHM";NR$ |
| 350 PRINT#2,"" |
| 360 PRINT#2, "BRANCH IDENTIFIERS:"; |
| 370 FOR N=1 TO C |
| 380 PRINT#2, USING"State ##";S(N); |
| 390 IF N<C THEN PRINT#2,";"; |
| 400 NEXT N |
| 410 PRINT#2,"" |
| 420 FOR J=1 TO S |
| 430 DM(1,J)=A(0,J) |
| 440 NEXT J |
| 450 FOR T=2 TO TS |
| 460 FOR J=1 TO S |
| 470 DM=0 |
| 480 FOR I=1 TO S |
| 490 D(T,J)=DM(T-1,I)*A(I,J) |
| 500 IF D(T,J)=>DM THEN DM=D(T,J):IM=I:JM=J: REM Most likely previous state |
| 510 DM(T,J)=DM |
| 520 IM(T,J)=IM |
| 530 JM(T,J)=JM |
| 540 NEXT I |
| 550 NEXT J |
| 560 NEXT T |
| 570 PRINT#2,"":PRINT#2, USING "A. THE MOST LIKELY BRANCH IDENTIFIERS AT TIAIES 2 TO #:";TS |
| 580 FOR T=2 TO TS |
| 590 DM=0 |
| 600 FOR J=1 TO S |
| 610 IF DM(T,J)=>DM THEN DM=DM(T,J):IM=IM(T,J):JM=JM(T,J): |
| REM Most likely endstate |
| 620 Y=0 |
| 630 FOR N=1 TO C |
| 640 IF S(N)=IM(T,J) THEN Y=1 |
| 650 REM Is the best previous state one of the branch identifiers ? |
| 660 NEXT N |
| 670 N=0 |
| 680 IF Y=O THEN SS(T,J)=SS(T-1,IM(T,J)) |
| 690 REM If best previous state is not a branch identifier, then the new best identifier is previous best identifier |
| 700 IF Y=1 THEN SS(T,J)=IM(T,J) |
| 710 REM If best previous state is one of the branch identifiers, then the new best identifier is best previous state |
| 720 IF DM(T,J)<>0 THEN PRINT#2, USING "At time t=# for state ## the most likely branch identifier is state ##; l=+##";T;JM(T,J);SS(T,J);- |
| LOG(DM(T,J)) |
| 730 NEXT J |
| 740 IF T=TS GOTO 760 |
| 750 NEXT T |
| 760 PRINT#2,"":PRINT#2,"B. THE MOST LIKELY ENDSTATE:" |
| 770 PRINT#2, USING "The most likely endstate at time t=# is state ## |
| (likelyhood l=+##),";T;JM;LOG(DM) |
| 780 PRINT#2, USING "for which the most likely branch identification state is state ##";SS(T,JM) |
| 790 PS=IM |
| 800 CLOSE |
| 810 IF NR$="2" THEN RUN "RECOGN.VIT" |
| 820 NR$="2": GOTO 130 |

**Table 14:**

| Demonstration program observation recognition according to Viterbi process |
|---|
| 100 REM SAVE"RECOGN.VIT",a |
| 110 DIM |
| A(20,20),B(20,20),D(20,20),DM(20,20),IM(20,20),JM(20,20),O(20),O$(20),PS(20):N$="":N=0 |
| 120 NR$="1" |
| 130 N$="":N=0 |
| 140 MODEL$="MARKOV"+NR$:PRINT MODEL$ |
| 150 REM ------------------------------- |
| 160 OPEN MODEL$+".MX1" FOR INPUT AS#1 |
| 170 INPUT#1,L$ |
| 180 S=VAL(RIGHT$(L$,3)):TS=8 |
| 190 INPUT#1,I |
| 200 FOR J=1 TO S |
| 210 INPUT#1,A(I,J) |
| 220 NEXT J |
| 230 IF NOT EOF(1) GOTO 190 |
| 240 CLOSE#1 |
| 250 REM ------------------------------- |
| 260 OPEN "WORD.INP" FOR INPUT AS#1 |
| 270 INPUT#1, OS$ |
| 280 FOR N=1 TO LEN(OS$) |
| 290 I$=MID$(OS$,N,1) |
| 300 IF (I$="X") THEN O(N)=1 |
| 310 IF (I$="Y") THEN O(N)=2 |
| 320 IF (I$="Z") THEN O(N)=3 |
| 330 NEXT N |
| 340 CLOSE#1:N=0 |
| 350 REM ------------------------------- |
| 360 OPEN MODEL$+".MX2" FOR INPUT AS#1 |
| 370 INPUT#1,A$ |
| 380 INPUT#1, I |
| 390 FOR C=1 TO 3 |
| 400 INPUT#1,B(I,C) |
| 410 NEXT C |
| 420 IF NOT EOF(1) GOTO 380 |
| 430 CLOSE#1 |
| 440 REM ---------------------------------- |
| 450 PR$=MODEL$+".RVI" |
| 460 OPEN PR$ FOR OUTPUT AS#2 |
| 470 PRINT#2,"" |
| 480 PRINT#2, USING"MOST LIKELY STATE PATH OF MODEL & FOR OBSERVATION & USING THE VITERBI ALGORITHM";NR$;OS$ |
| 490 PRINT#2,"" |
| 500 FOR J=1 TO S |
| 510 DM(1,J)=A(0,J)*B(J,O(1)) |
| 520 NEXT J |
| 530 FOR T=2 TO TS |
| 540 FOR J=1 TO S |
| 550 DM=0 |
| 560 FOR I=1 TO S |
| 570 D(T,J)=DM(T-1,I)*A(I,J)*B(J,O(T)) |
| 580 IF D(T,J)=>DM THEN DM=D(T,J):IM=I:JM=J |
| 590 DM(T,J)=DM |
| 600 IM(T,J)=IM |
| 610 JM(T,J)=JM |
| 620 NEXT I |
| 630 NEXT J |
| 640 NEXT T |
| 650 PRINT#2,"":PRINT#2, USING "A. THE MOST LIKELY PREVIOUS STATES AT TIMES 2 TO #:";TS |
| 660 FOR T=2 TO TS |
| 670 DM=0 |
| 680 FOR J=1 TO S |
| 690 IF DM(T,J)=>DM THEN DM=DM(T,J):IM=IM(T,J):JM=JM(T,J) |
| 700 IF DM(T,J)<>0 THEN PRINT#2, USING "At time t=# for state ## the most likely previous state was state ##; |
| l=+##";T;JM(T,J);IM(T,J);LOG(DM(T,J)) |
| 710 NEXT J |
| 720 IF T=TS GOTO 740 |
| 730 NEXT T |
| 740 PRINT#2,"":PRINT#2,"B. THE MOST LIKELY ENDSTATE:" |
| 750 PRINT#2, USING "The most likely endstate at time t=# is state ## (likelyhood l=+##)";T;JM;LOG(DM) |
| 760 PS=IM |
| 770 PRINT#2,"":PRINT#2, USING"C. TRACING BACK FROM THE |
| MOST LIKELY ENDSTATE (STATE ##):";JM |
| 780 PS=JM:N=N+1:PS(N)=PS |
| 790 FOR T=TS TO 2 STEP -1 |
| 800 FOR J=1 TO S |
| 810 IF J=PS THEN PS=IM(T,J): N=N+1:PS(N)=PS:GOTO 830 |
| 820 NEXT J |
| 830 PRINT#2, USING "At time t=# for state ## the most likely previous state was state ##";T;J;PS |
| 840 NEXT T |
| 850 PRINT#2,"":PRINT#2, USING "SUMMARIZING, TRACING BACK FROM T=# TO T=# RESULTS INTO THE SEQUENCE:";TS;1 |
| 860 FOR M=1 TO N |
| 870 PRINT#2, USING "State ##";PS(M); |
| 880 IF M<N THEN PRINT#2, "; "; |
| 890 NEXT M |
| 900 PRINT#2,"":PRINT#2,"":PRINT#2, USING"THUS, THE MOST LIKELY STATE PATH FROM T=# TO T=# FOR OBSERVATION & IS:";1;TS;OS$ |
| 910 FOR M=N TO 1 STEP -1 |
| 920 PRINT#2, USING "State ##";PS(M); |
| 930 IF M>1 THEN PRINT#2, "; "; |
| 940 NEXT M |
| 950 CLOSE |
| 960 IF NR$="2" THEN RUN "RECOGN.INV" |
| 970 NR$="2": GOTO 130 |

**Table 15:**

| Demonstration program observation recognition according to novel process |
|---|
| 100 REM SAVE"RECOGN.INV",a |
| 110 DIM |
| A(20,20),B(20,20),D(20,20),DM(20,20),IM(20,20),JM(20,20),O(20),O$(20),PS(20),S(20),SS(20,20):N$="":N=0 |
| 120 NR$="1" |
| 130 C=0:N$="":N=0 |
| 140 MODEL$="MARKOV"+NR$: PRINT MODEL$ |
| 150 REM ------------------------------- |
| 160 OPEN MODEL$+".MX1" FOR INPUT AS#1 |
| 170 INPUT#1,L$ |
| 180 S=VAL(RIGHT$(L$,3)):TS=8 |
| 190 INPUT#1,I |
| 200 FOR J=1 TO S |
| 210 INPUT#1,A(I,J) |
| 220 NEXT J |
| 230 IF NOT EOF(1) GOTO 190 |
| 240 CLOSE#1 |
| 250 REM ------------------------------- |
| 260 OPEN MODEL$+".SET" FOR INPUT AS#1 |
| 270 C=C+1:INPUT#1,S(C) |
| 280 IF NOT EOF(1) GOTO 270 |
| 290 CLOSE#1 |
| 300 OPEN "WORD.INP" FOR INPUT AS#1 |
| 310 INPUT#1, OS$ |
| 320 FOR N=1 TO LEN(OS$) |
| 330 I$=MID$(OS$,N,1) |
| 340 IF (I$="X") THEN O(N)=1 |
| 350 IF (I$="Y") THEN O(N)=2 |
| 360 IF (I$="Z") THEN O(N)=3 |
| 370 NEXT N |
| 380 CLOSE#1:N=0 |
| 390 REM ------------------------------- |
| 400 OPEN MODEL$+".MX2" FOR INPUT AS#1 |
| 410 INPUT#1,A$ |
| 420 INPUT#1, I |
| 430 FOR D=1 TO 3 |
| 440 INPUT#1,B(I,D) |
| 450 NEXT D |
| 460 IF NOT EOF(1) GOTO 420 |
| 470 CLOSE#1 |
| 480 REM ---------------------------------- |
| 490 PR$=MODEL$+".RIV" |
| 500 OPEN PR$ FOR OUTPUT AS#2 |
| 510 PRINT#2, "" |
| 520 PRINT#2, USING"MOST LIKELY PATH IDENTIFICATION OF MODEL & FOR OBSERVATION & USING THE NEW ALGORITHM";NR$;OS$ |
| 530 PRINT#2,"" |
| 540 PRINT#2, "BRANCH IDENTIFIERS: "; |
| 550 FOR N=1 TO C |
| 560 PRINT#2, USING"State ##";S(N); |
| 570 IF N<C THEN PRINT#2,";"; |
| 580 NEXT N |
| 590 PRINT#2,"" |
| 600 FOR J=1 TO S |
| 610 DM(1,J)=A(0,J)*B(J,O(1)) |
| 620 NEXT J |
| 630 FOR T=2 TO TS |
| 640 FOR J=1 TO S |
| 650 DM=0 |
| 660 FOR I=1 TO S |
| 670 D(T,J)=DM(T-1,I)*A(I,J)*B(J,O(T)) |
| 680 IF D(T,J)=>DM THEN DM=D(T,J):IM=I:JM=J |
| 690 DM(T,J)=DM |
| 700 IM(T,J)=IM |
| 710 JM(T,J)=JM |
| 720 NEXT I |
| 730 NEXT J |
| 740 NEXT T |
| 750 PRINT#2,"":PRINT#2, USING "A. THE MOST LIKELY BRANCH IDENTIFIERS AT TIMES 2 TO #:";TS |
| 760 FOR T=2 TO TS |
| 770 DM=0 |
| 780 FOR J=1 TO S |
| 790 IF DM(T,J)=>DM THEN DM=DM(T,J):IM=IM(T,J):JM=JM(T,J) |
| 800 Y=0 |
| 810 FOR N=1 TO C |
| 820 IF S(N)=IM(T,J) THEN Y=1 |
| 830 REM Is the best previous state one of the branch identifiers ? |
| 840 NEXT N |
| 850 N=0 |
| 860 IF Y=O THEN SS(T,J)=SS(T-1,IM(T,J)) |
| 870 REM If best previous state is not a branch identifier, then the new best identifier is previous best identifier |
| 880 IF Y=1 THEN SS(T,J)=IM(T,J) |
| 890 REM If best previous state is one of the branch identifiers, then the new best identifier is best previous state |
| 900 IF DM(T,J)<>0 THEN PRINT#2, USING "At time t=# for state ## the most likely branch identifier is state ##; I=+##";T;JM(T,J);SS(T,J);LOG(DM(T,J)) |
| 910 NEXT J |
| 920 IF T=TS GOTO 940 |
| 930 NEXT T |
| 940 PRINT#2,"":PRINT#2,"B. THE MOST LIKELY ENDSTATE:" |
| 950 PRINT#2, USING "The most likely endstate at time t=# is state ## (likelyhood l=+##)";T;JM;LOG(DM) |
| 960 PRINT#2, USING "for which the most likely path identification state is state ##";SS(T,JM) |
| 970 CLOSE |
| 980 IF NR$="2" THEN SYSTEM |
| 990 NR$="2": GOTO 130 |

**Table 16:**

| Demonstration program path identification with state-independent cluster identifiers |
|---|
| 100 REM SAVE"PATH.CID",a |
| 110 DIM A(20,20),B(20,20),D(20,20),DM(20,20),IM(20,20),JM(20,20),O(20),O$(20),PS(20),S(20),S$(20),SS$(20,20),SS(20,20):N$="":N=0 120 NR$="1" |
| 130 C=0:N$="":N=0 |
| 140 MODEL$="MARKOV"+NR$: PRINT MODEL$ |
| 150 REM ------------------------------- |
| 160 OPEN MODEL$+".MX1" FOR INPUT AS#1 |
| 170 INPUT#1,L$ |
| 180 S=VAL(RIGHT$(L$,3)):TS=8 |
| 190 INPUT#1,I |
| 200 FOR J=1 TO S |
| 210 INPUT#1,A(I,J) |
| 220 NEXT J |
| 230 IF NOT EOF(1) GOTO 190 |
| 240 CLOSE#1 |
| 250 REM ------------------------------- |
| 260 OPEN MODEL$+".CID" FOR INPUT AS#1 |
| 270 C=C+1:INPUT#1,S(C),S$(C) |
| 280 IF NOT EOF(1) GOTO 270 |
| 290 CLOSE#1 |
| 300 REM ------------------------------- |
| 310 PR$="MARKOV"+NR$+".PCI" |
| 320 OPEN PR$ FOR OUTPUT AS#2 |
| 330 PRINT#2,"" |
| 340 PRINT#2, USING"MOST LIKELY PATH IDENTIFICATION OF MODEL & USING THE NEW ALGORITHM";NR$ 350 PRINT#2,"" |
| 360 PRINT#2, "CLUSTER IDENTIFIERS:" |
| 370 FOR N=1 TO C |
| 380 PRINT#2, USING"State ## has cluster identifier &";S(N);S$(N) |
| 390 NEXT N |
| 400 PRINT#2,"" |
| 410 FOR J=1 TO S |
| 420 DM(1,J)=A(0,J) |
| 430 NEXT J |
| 440 FOR T=2 TO TS |
| 450 FOR J=1 TO S |
| 460 DM=0 |
| 470 FOR I=1 TO S |
| 480 D(T,J)=DM(T-1,I)*A(I,J) |
| 490 IF D(T,J)=>DM THEN DM=D(T,J):IM=I:JM=J: REM Most likely previous state |
| 500 DM(T,J)=DM |
| 510 IM(T,J)=IM |
| 520 JM(T,J)=JM |
| 530 NEXT I |
| 540 NEXT J |
| 550 NEXT T |
| 560 PRINT#2,"":PRINT#2, USING "A. THE MOST LIKELY CLUSTER IDENTIFIERS AT TIMES 2 TO #:";TS 570 FOR T=2 TO TS |
| 580 DM=0 |
| 590 FOR J=1 TO S |
| 600 IF DM(T,J)=>DM THEN DM=DM(T,J):IM=IM(T,J):JM=JM(T,J): REM Most likely endstate 610 Y=0 |
| 620 FOR N=1 TO C |
| 630 IF S(N)=IM(T,J) THEN Y=1:CID$=S$(N) |
| 640 REM Is the best previous state one of the cluster identifiers ? |
| 650 NEXT N |
| 660 N=0 |
| 670 IF Y=O THEN SS(T,J)=SS(T-1,IM(T,J)) |
| 680 IF Y=O THEN SS$(T,J)=SS$(T-1,IM(T,J)) |
| 690 REM If best previous state is not a cluster identifier, then the new best identifier is previous best identifier |
| 700 IF Y=1 THEN SS(T,J)=IM(T,J) |
| 710 IF Y=1 THEN SS$(T,J)=CID$:REM CID$ = Cluster ID or branch ID |
| 720 REM If best previous state is one of the cluster identifiers, then the new best identifier is best previous state |
| 730 IF SS$(T,J)<>"" THEN PRINT#2, USING "At time t=# for state ## the most likely cluster identifier is &; l=+##";T;JM(T,J);SS$(T,J);LOG(DM(T,J)) |
| 740 NEXT J |
| 750 IF T=TS GOTO 770 |
| 760 NEXT T |
| 770 PRINT#2,"":PRINT#2,"B. THE MOST LIKELY ENDSTATE:" |
| 780 PRINT#2, USING "The most likely endstate at time t=# is state ## (likelyhood l=+##),";T;JM;LOG(DM) 790 PRINT#2, USING "for which the most likely cluster identifier is &";SS$(T,JM) 800 PS=IM |
| 810 CLOSE |
| 820 IF NR$="2" THEN END |
| 830 NR$="2": GOTO 130 |

## Claims

1. Method for determining the most likely path through a stochastic network having various states (Sn) which are defined a priori and can be reached with probabilities (aij) known a priori, such as a Markov model, which network comprises various subnetworks, such as network branches, each having one or more of such states, CHARACTERIZED IN THAT there is detected, at successive moments, for at least one state, through which of these different subnetworks runs the most likely path ending in that state.

2. Method according to Claim 1 CHARACTERIZED IN THAT there is assigned a priori to each subnetwork at least one identification code which is representative for that subnetwork and in that there is detected, at successive moments, for at least one state, which is the identification code which belongs to that most likely path ending in said state.

3. Method according to Claim 2, CHARACTERIZED IN THAT for the identification code of a subnetwork the designation is used of at least one state which forms part of that subnetwork.

4. Method for recognizing a priori unknown signal elements such as elements of a speech or image signal, the most likely path through a stochastic network having various subnetworks being determined according to Claim 1, 2 or 3, said subnetworks being mappings of various signal elements known a priori, such as words or images.

## Patentansprüche

1. Verfahren zur Bestimmung des wahrscheinlichsten Weges durch ein stochastisches Netzwerk, das verschiedene Zustände (Sn) aufweist, die a priori definiert sind und mit a priori bekannten Wahrscheinlichkeiten (aji) erreichbar sind, wie ein Markow-Modell, und das verschiedene Unternetzwerke aufweist, wie z.B. Netzwerkzweige, von denen jeder einen oder mehrere solcher Zustände aufweist,
dadurch gekennzeichnet, dass an aufeinander folgenden Zeitpunkten für zumindest einen Zustand festgestellt wird, durch welches dieser verschiedenen Unternetzwerke der wahrscheinlichste Weg verläuft, der in diesem Zustand endet.

2. Verfahren nach Anspruch 1, dadurch gekennzeichnet, daß a priori jedem Unternetzwerk mindestens ein Identifikationscode zugeordnet wird, der repräsentativ für dieses Untemetzwerk ist, und dass in an aufeinander folgenden Zeitpunkten für zumindest einen Zustand festgestellt wird, welcher derjenige Identifikationscode ist, der zu demjenigen wahrscheinlichsten Weg gehört, der in diesem Zustand endet.

3. Verfahren nach Anspruch 2, dadurch gekennzeichnet, daß für den Identifikationscode eines Unternetzwerkes die Benennung zumindest eines Zustandes benutzt wird, der Teil dieses Unternetzwerks ist.

4. Verfahren zur Erkennung von a priori unbekannten Signalelementen wie z.B. Elementen eines Sprach- oder Bildsignals, wobei der wahrscheinlichste Weg durch ein stochastisches Netzwerk mit verschiedenen Unternetzwerken gemäß Anspruch 1, 2 oder 3 ermittelt wird, und wobei die Unternetzwerke Abbildungen von verschiedenen a priori bekannten Signalelementen wie Wörter oder Bilder sind.

## Revendications

1. Procédé destiné à déterminer le trajet le plus probable au travers d'un réseau stochastique présentant divers états (Sn) qui sont définis a priori et peuvent être atteints avec des probabilités (aij) connues a priori, tel qu'un modèle de Markov, lequel réseau comprend divers sous-réseaux, tels que des branches de réseaux, chacun présentant un ou plusieurs de tels états, Caractérisé en ce qu'il est détecté, à des instants successifs, pour au moins un état, au travers duquel de ces différents sous-réseaux passe le trajet le plus probable aboutissant dans cet état.

2. Procédé selon la revendication 1 Caractérisé en ce qu'il est affecté a priori à chaque sous-réseau au moins un code d'identification qui est représentatifpour ce sous-réseau et en ce qu'il est détecté, à des instants successifs, pour au moins un état, quel est le code d'identification qui appartient à ce trajet le plus probable aboutissant dans ledit état.

3. Procédé selon la revendication 2, Caractérisé en ce que, pour le code d'identification d'un sous-réseau, est utilisée la désignation d'au moins un état qui fait partie de ce sous-réseau.

4. Procédé destiné à reconnaître des éléments de signaux inconnus a priori tels que les éléments d'un signal vocal ou image, le trajet le plus probable au travers d'un réseau stochastique présentant divers sous-réseaux étant déterminé selon la revendication 1,2 ou 3, lesdits sous-réseaux étant des mappages des divers éléments de signaux connus a priori, tels que des mots ou des images.
